# EUROPÄISCHE PATENTANMELDUNG

(11) **EP 2 500 589 A1**
(43) Veröffentlichungstag der Anmeldung: **19.09.2012**
(21) Anmeldenummer: 12159401.4
(22) Anmeldetag: 14.03.2012
(51) Int. Cl.: F16C 27/06, F16F 9/53

(54) **Lageranordnung**

(30) Priorität: 14.03.2011 DE 102011005494
(71) Anmelder: Aktiebolaget SKF, 41 550 Göteborg (SE)
(72) Erfinder: Gläntz, Wolfgang, 97422 Schweinfurt (DE); Kern, Henning, 97422 Schweinfurt (DE); Lorenscheit, Jochen, 97222 Rimpar (DE); Dr. Schulz, Ingo, 97447 Gerolzhofen (DE)
(74) Vertreter: Schonecke, Mitja

(57) **Zusammenfassung**

Die Erfindung betrifft eine Lageranordnung (1), umfassend ein Lager (2) mit mindestens einem Lagerinnenring (3) und mindestens einem Lageraußenring (4), wobei mindestens einer der Lagerringe (3, 4) auf oder in einer Lageraufnahme (5) angeordnet ist und wobei zwischen dem Lagerring (3, 4) und der Lageraufnahme (5) ein Elastomermaterial (6) angeordnet ist. Um Schwingungen und Geräusche der Lageranordnung in deren Betrieb zu vermindern, sieht die Erfindung vor, dass in das Elastomermaterial (6) Mittel (7) eingelagert sind, mit denen die radiale und/oder axiale Steifigkeit des Elastomermaterials (6) verändert werden kann.

## Beschreibung

Die Erfindung betrifft eine Lageranordnung, umfassend ein Lager mit mindestens einem Lagerinnenring und mindestens einem Lageraußenring, wobei mindestens einer der Lagerringe auf oder in einer Lageraufnahme angeordnet ist, wobei zwischen dem Lagerring und der Lageraufnahme ein Elastomermaterial angeordnet ist und wobei in das Elastomermaterial Mittel eingelagert sind, mit denen die radiale und/oder axiale Steifigkeit des Elastomermaterials verändert werden kann.

Lageranordnungen dieser Art sind im Stand der Technik hinlänglich bekannt. Um insbesondere ein gutes Dämpfungsverhalten beispielweise zwischen einem Lagerring und einem Gehäuse sicherzustellen, wird ein Zwischenring aus Elastomermaterial zwischen dem Lageraußenring und dem Gehäuse platziert. Durch die Wahl der Materialeigenschaften des Elastomermaterials, insbesondere dessen Härte, kann das Schwingungs- und Dämpfungsverhalten beeinflusst werden.

Mittel zur Veränderung der Eigenschaften des Elastomermaterials offenbart die DE 37 01 887 A1, wobei die Mittel hier mechanische Elemente sind (Schrauben), die in das Elastomermaterial eingebracht werden. Die JP 04073420 A zeigt eine aufweitbare Aufnahmekammer für ein Medium, das durch Wärmeeinwirkung verdampft und so die Feder- bzw. Dämpfeigenschaften der Lageraufnahme verändert. Ein pneumatisches bzw. hydraulisches Element (Fluidblase) zeigen die WO 2006/072051 A2 und die US 2 155 919 A**,** über das wiederum die Feder- bzw. Dämpfeigenschaften der Lageraufnahme verändert werden kann. In der US 6 883 967 B2**,** in der EP 0 784 163 B1 und in der WO 2006/024457 A1 werden magnetorheologische Elastomere eingesetzt, d. h. hiermit kann über die Wirkung eines Magnetfeldes auf die Feder- bzw. Dämpfeigenschaften der Lageraufnahme Einfluss genommen werden.

Die Aufnahme des Lagers in seinem Gehäuse hat einen maßgeblichen Einfluss auf das Betriebsverhalten des gesamten Systems, für dessen drehbare Teile das Lager eingesetzt wird. Problematisch ist dabei, dass insbesondere durch Schwingungen und Stöße wesentliche Leistungsparameter des Systems gemindert werden, was sich in einem nicht optimalen bzw. wunschgemäßen Betriebsverhalten bemerkbar macht. Im Grenzfall kann es auch zu einem kompletten Ausfall des technischen Systems kommen.

Problematisch ist dabei, dass die Auswahl der Eigenschaften der elastomeren Zwischenschicht stets nur für einen optimalen Betriebspunkt erfolgen kann. In benachbarten Betriebspunkten mit anderen Betriebsparametern liegen dann zumeist keine optimalen Bedingungen vor.

Der Erfindung liegt daher die Aufgabe zugrunde, eine Lageranordnung der eingangs genannten Art so fortzubilden, dass es möglich ist, das Schwingungsverhalten in effizienter Weise so zu beeinflussen, dass über große Strecken hinweg, d. h. über weitere Bereiche der Betriebsparameter, ein verbessertes Betriebs- und insbesondere Schwingungsverhalten vorliegt und somit auch die Geräuschentwicklung der Lageranordnung minimiert werden kann.

Die Lösung dieser Aufgabe durch die Erfindung ist dadurch gekennzeichnet, dass die Mittel eine elektrorheologische Flüssigkeit sind, wobei diese mit einer Stromquelle in elektrischer Verbindung steht.

Bei derartigen elektrorheologischen Flüssigkeiten (auch elektrorheologische Fluide genannt) handelt es sich um adaptive Materialien, deren Fließverhalten durch das Anlegen eines elektrischen Feldes in gewissen Bereichen schnell und reversibel gesteuert werden kann.

Man unterscheidet hierbei zwischen homogenen und heterogenen elektrorheologischen Flüssigkeiten. Die homogenen Fluide bestehen z. B. aus Aluminiumsalzen der Stearinsäure. Die heterogenen Fluide bestehen aus polarisierbaren Teilchen oder Tröpfchen, die in einer elektrisch nichtleitendenden Trägerflüssigkeit, z. B. in Silicon- oder Mineralöl, dispergiert sind. Durch ein externes elektrisches Feld werden in den Partikeln Dipole induziert. Die Teilchen bilden Ketten und Säulen entlang der Feldlinien des elektrischen Feldes.

Die Lageraufnahme ist bevorzugt eine Bohrung in einem Gehäuse.

Zwischen dem Elastomermaterial und der Lageraufnahme kann eine Aufnahmehülse angeordnet sein.

Das Lager kann ein Wälzlager sein; aber auch die Anwendung in Gleitlagern ist möglich.

Eine bevorzugte Ausgestaltung der Erfindung sieht vor, dass das Elastomermaterial zwischen dem Lageraußenring und der Aufnahmehülse angeordnet ist, wobei die Aufnahmehülse in der Bohrung des Gehäuses angeordnet ist.

Die Erfindung schlägt also vor, die elastomere Zwischenschicht zwischen Lagerring und Gehäuse beeinflussbar zu machen, so dass insbesondere deren radiale Steifigkeit verändert werden kann. Damit kann eine adaptive Anordnung geschaffen werden, mit der gezielt auf die schwingungsdämpfenden Eigenschaften der Lageranordnung Einfluss genommen werden kann.

Das Lager wird bevorzugt in eine Buchse eingebaut, die wiederum in das Gehäuse eingesetzt wird und als Zwischenschicht das Elastomermaterial aufweist. Das Elastomermaterial enthält Substanzen, die elektrorheologische, ferrofluide, hydraulische oder temperaturaktive Eigenschaften aufweisen. Diese ermöglichen es, durch Anlegen einer Spannung, einer Temperatur oder eines Drucks die Steifigkeit des Elastomers kontinuierlich oder diskret in einem weiten Bereich zu verändern.

Hierdurch wird insbesondere das Eigenschwingverhalten der Lageraufnahme variierbar, so dass diese an die jeweiligen Betriebsbedingungen optimal angepasst werden kann.

Vorteilhaft ist demgemäß, dass eine gezielte Isolierung einer Schwingung möglich ist, indem die wirksame (Feder-)Steifigkeit zwischen Lager und Gehäuse durch die genannten Maßnahmen angepasst wird.

Somit ergibt sich eine Geräuschminimierung durch gezielte Dämpfung, d. h. durch die Unterbrechung des Körperschalls.

Weiterhin besteht die Möglichkeit der Induzierung einer Schwingung, deren Frequenz und Amplitude derart gewählt ist, dass sie der Erregerschwingung von der Lagerung oder dem Gehäuse entgegenwirkt.

Dabei ist eine selbständige Einstellung und Regelung des Steifigkeitsverhaltens der Elastomerschicht mit den beschriebenen Mitteln realisierbar.

In der Zeichnung sind Ausführungsbeispiele der Erfindung dargestellt. Es zeigen:
- Fig. 1: den Radialschnitt durch eine Lageranordnung, wobei in ein Elastomermaterial eine elektrorheologische Flüssigkeit eingebracht ist,
- Fig. 2: den Radialschnitt durch eine nicht erfindungsgemäße Lageranordnung, wobei in das Elastomermaterial eine hydraulische Kammer eingebracht ist, und
- Fig.3: den Radialschnitt durch eine nicht erfindungsgemäße Lageranordnung, wobei in das Elastomermaterial eine temperaturaktivierbare Substanz eingebracht ist.

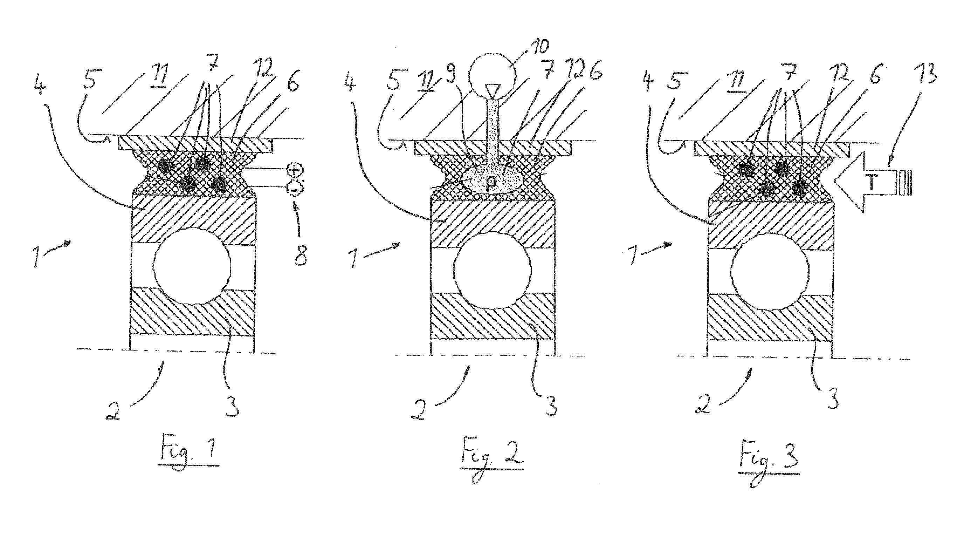

In Fig. 1 ist im Radialschnitt eine Lageranordnung 1 skizziert, die ein Lager 2 in Form eines Rillenkugellagers umfasst. Das Lager 2 hat einen Lagerinnenring 3 und einen Lageraußenring 4. Der Lageraußenring 4 sitzt in einer Lageraufnahme 5 in Form einer Bohrung in einem Gehäuse 11.

Allerdings ist der Lageraußenring 4 nicht unmittelbar in der Bohrung 5 angeordnet, sondern mittelbar. Zunächst ist in die Bohrung 5 eine Aufnahmehülse 12 eingesetzt, die eine hohlzylindrische Form aufweist.

Zwischen der radial innenliegenden Fläche der Aufnahmehülse 12 und der radial außenliegenden Fläche des Lageraußenrings 4 ist eine im wesentlichen hohlzylindrisch geformte Schicht aus Elastomermaterial 6 angeordnet (nur an den Stirnseiten weist die Elastomerschicht Einschnürungen auf, wie sich aus dem dargestellten Radialschnitt ergibt).

Wesentlich ist, dass in das Elastomermaterial 6 Mittel 7 eingelagert sind, mit denen die radiale und/oder axiale Steifigkeit des Elastomermaterials 6 verändert werden kann.

Im Ausführungsbeispiel nach Fig. 1 handelt es sich bei dem Mittel um ein elektrorheologisches Material (s. hierzu die obigen Ausführungen). Das elektrorheologische Material 7 ist an eine Stromquelle 8 elektrisch gekoppelt. Durch Anlegen einer elektrischen Spannung an das elektrorheologische Material 7 verändert das Elastomermaterial 6 seine radiale Steifigkeit und somit das Anbindungsverhalten zwischen Gehäuse 11 und Lageraußenring 4. Mithin kann durch entsprechende Wahl der Spannung der Stromquelle 8 die radiale Steifigkeit zwischen Gehäuse 11 und Lageraußenring 4 verändert werden. Dies kann im geschlossenen Regelkreis erfolgen, so dass ein gewünschter Wert für die radiale Steifigkeit aufrechterhalten wird.

Hierdurch ist es möglich, die radiale Steifigkeit so zu wählen, dass sich ein Eigenschwingungsverhalten in radiale Richtung zwischen Gehäuse 11 und Lageraußenring 4 ergibt, das außerhalb des Bereichs liegt, in dem die Anregungsfrequenzen im Betrieb der Lageranordnung liegen. So kann die Lageranordnung 1 in einem Bereich abseits von Resonanzfrequenzen betrieben werden.

In Fig. 2 ist eine alternative Lösung zu sehen, die allerdings insofern mit derjenigen gemäß Fig. 1 übereinstimmt, als dass auch hier in das Elastomermaterial 6 Mittel 7 eingelagert sind, mit denen die radiale Steifigkeit des Elastomermaterials 6 verändert werden kann. Die Mittel werden hier durch eine hydraulische Kammer 9 gebildet, die mit einer Druckquelle 10 in Verbindung steht. In Abhängigkeit des Drucks p in der hydraulischen Kammer 9 verändert sich die radiale Steifigkeit zwischen Lageraußenring 4 und Gehäuse 11.

Eine nochmals alternative Lösung zeigt Fig. 3. Hier sind in das Elastomermaterial 6 Mittel 7 in Form einer temperaturaktiven Substanz eingelagert. Mittels einer Wärmequelle 13 kann Wärme in das Elastomermaterial 6 eingetragen werden, was die temperaturaktive Substanz zu einer Veränderung ihres mechanischen Verhaltens veranlasst, so dass sich wiederum die radiale Steifigkeit zwischen Lageraußenring 4 und Gehäuse 11 verändert.

Mit allen dargestellten Varianten kann gezielt auf die radiale (und ggf. auch axiale) Steifigkeit des Elastomermaterials 6 Einfluss genommen werden, so dass optimale Betriebspunkte angefahren und eingehalten werden können.

### Bezugszeichenliste

- 1: Lageranordnung
- 2: Lager
- 3: Lagerinnenring
- 4: Lageraußenring
- 5: Lageraufnahme
- 6: Elastomermaterial
- 7: Mittel zur Veränderung der Steifigkeit
- 8: Stromquelle / Spannungsquelle
- 9: hydraulische Kammer
- 10: Druckquelle
- 11: Gehäuse
- 12: Aufnahmehülse
- 13: Wärmequelle

## Patentansprüche

1. Lageranordnung (1), umfassend ein Lager (2) mit mindestens einem Lagerinnenring (3) und mindestens einem Lageraußenring (4), wobei mindestens einer der Lagerringe (3, 4) auf oder in einer Lageraufnahme (5) angeordnet ist, wobei zwischen dem Lagerring (3, 4) und der Lageraufnahme (5) ein Elastomermaterial (6) angeordnet ist und wobei in das Elastomermaterial (6) Mittel (7) eingelagert sind, mit denen die radiale und/oder axiale Steifigkeit des Elastomermaterials (6) verändert werden kann,
**dadurch gekennzeichnet**,
die Mittel (7) eine elektrorheologische Flüssigkeit sind, wobei diese mit einer Stromquelle (8) in elektrischer Verbindung steht.

2. Lageranordnung nach Anspruch 1, **dadurch gekennzeichnet, dass** die Lageraufnahme (5) eine Bohrung in einem Gehäuse (11) ist.

3. Lageranordnung nach Anspruch 1 oder 2, **dadurch gekennzeichnet, dass** zwischen dem Elastomermaterial (6) und der Lageraufnahme (5) eine Aufnahmehülse (12) angeordnet ist.

4. Lageranordnung nach einem der Ansprüche 1 bis 3, **dadurch gekennzeichnet, dass** das Lager (2) ein Wälzlager ist.

5. Lageranordnung nach Anspruch 3 oder 4, **dadurch gekennzeichnet, dass** das Elastomermaterial (6) zwischen dem Lageraußenring (4) und der Aufnahmehülse (12) angeordnet ist, wobei die Aufnahmehülse (12) in der Bohrung (5) des Gehäuses (11) angeordnet ist.
